# EUROPÄISCHE PATENTSCHRIFT

(11) **EP 3 999 361 B1**
(45) Veröffentlichungstag und Bekanntmachung des Hinweises auf die Patenterteilung: **15.11.2023**
(21) Anmeldenummer: 20732525.9
(22) Anmeldetag: 08.06.2020
(51) Int. Cl.: B60C 11/13, B60C 11/03

(54) **NUTZFAHRZEUGREIFEN**
UTILITY VEHICLE TIRE
PNEUMATIQUES POUR VÉHICULES UTILITAIRES

(30) Priorität: 15.07.2019 DE 102019210428
(43) Veröffentlichungstag der Anmeldung: 25.05.2022
(73) Patentinhaber: Continental Reifen Deutschland GmbH, 30165 Hannover (DE)
(72) Erfinder: SLEMENSKA, Andrea, 30419 Hannover (DE); PORUBSKY, Daniel, 30419 Hannover (DE); KRISTEN, Florian, 30419 Hannover (DE); CRACIUN, Dragos, 30419 Hannover (DE)
(74) Vertreter: Continental Corporation
(86) Internationale Anmeldenummer: PCT/EP2020/065756
(87) Internationale Veröffentlichungsnummer: WO 2021/008774

(56) Entgegenhaltungen:
- DE-A1- 4 112 046
- JP-A- 2007 001 484
- JP-A- 2010 215 103
- KR-A- 20030 050 421
- US-A1- 2015 090 383

## Beschreibung

Die Erfindung betrifft einen Nutzfahrzeugreifen mit einem Laufstreifen mit zumindest einer von einer Umfangsrille begrenzten, schulterseitigen Profilblockreihe mit einer Schulterflanke und parallel zueinander verlaufenden Querrillen, welche eine Rillenmündung an der Umfangsrille sowie einen Rillenaustritt an der Schulterflanke und eine Breite aufweisen, welche dem zwischen den Rillenkanten bzw. deren Verlängerungen in Umfangsrichtung vorliegenden Abstand entspricht, wobei die Breite der Querrillen am Rillenaustritt 6,0 mm bis 12,0 mm beträgt. Ein derartiger Nutzfahrzeugreifen ist aus der JP 2010 215 103 A bekannt. Der Laufstreifen dieses Reifens weist von Umfangsrillen begrenzte, schulterseitige Profilblockreihen mit je einer Schulterflanke und parallel zueinander verlaufenden Querrillen mit gerade verlaufenden Rillenkanten, jeweils einer Rillenmündung an der entsprechenden Umfangsrille sowie jeweils einem Rillenaustritt an der entsprechenden Schulterflanke auf. Die schulterseitigen Querrillen weisen eine Breite auf, welche ausgehend vom Rillenaustritt zur Rillenmündung auf das 1,33- bis 4,0-Fache zunimmt. Der Reifen soll gleichmäßige Abriebeigenschaften aufweisen.

Aus der DE 41 12 046 A1 ist ein Hochgeschwindigkeitsreifen mit einem Laufstreifen mit zumindest einer Umfangsrille und mehreren in Umfangsrichtung aufeinanderfolgenden, sich über die Umfangsrille hinweg erstreckenden Schrägrillen bekannt. In den schulterseitigen Laufstreifenbereichen trennen Schrägrillenabschnitte, welche schulterseitigen Querrillen entsprechen, Profilblöcke einer schulterseitigen Profilblockreihe. Die schulterseitigen Querrillen weisen eine in Umfangsrichtung ermittelte Breite auf, welche ausgehend vom seitlichen Rand der Bodenaufstandsfläche zur Rillenmündung an der Umfangsrille auf das 1,5- bis 3,0-Fache zunimmt. Der Reifen soll eine verbesserte Wasserdrainage, ein vermindertes Reifen-Fahrbahn-Geräusch und eine gute Lenkstabilität auf trockener Straße aufweisen.

Es ist bekannt, Fahrzeugluftreifen zur Verbesserung ihrer Traktionseigenschaften auf Schnee, Eis sowie Forst- und Waldwegen mit Schnee- oder Traktionsketten zu versehen. Aktuell bestehen unterschiedliche Ansichten darüber, ob die Ketten fest gespannt oder locker am Reifen zu befestigen sind.

Bei Nutzfahrzeugreifen neigen fest gespannte Ketten dazu, sich früher oder später in den schulterseitigen Querrillen des Laufstreifens einzuklemmen und nachfolgend die Profilblöcke, insbesondere im Bereich der Blockecken und der Blockkanten, oder die Seitwände zu beschädigen. Ferner haben sich fest gespannte Ketten im Hinblick auf die Traktionswirkung bei Nutzfahrzeugreifen als nicht optimal erwiesen.

Locker an Nutzfahrzeugreifen befestigte Ketten können sich beim Fahren relativ zum Reifen bewegen, ihre Wirkung auf die Traktionseigenschaften ist günstiger als jene der fest gespannten Ketten. Es besteht jedoch auch bei locker befestigten Ketten die Gefahr, dass Kettenglieder bzw. Kettenabschnitte in die schulterseitigen Querrillen fallen und sich in diesen verfangen bzw. verklemmen, sodass auch in diesem Fall durch die in den Querrillen verfangenen Kettenglieder die schulterseitigen Profilblöcke, insbesondere im Bereich der Blockecken und der Blockkanten, oder die Seitwände beschädigt werden können. Darüber hinaus können in den Querrillen verfangene Kettenglieder ihre Traktionswirkung nicht mehr optimal entfalten.

Der Erfindung liegt daher die Aufgabe zugrunde, bei einem Nutzfahrzeugreifen der eingangs genannten Art die Gefahr von Schäden im Bereich der schulterseitigen Profilblöcke und der Seitenwände beim Einsatz von locker befestigten Schnee- oder Traktionsketten deutlich zu reduzieren.

Gelöst wird die gestellte Aufgabe erfindungsgemäß dadurch, dass die Breite der Querrillen ausgehend vom Rillenaustritt zur Rillenmündung kontinuierlich auf das 1,5- bis 1,7-Fache zunimmt.

Durch solche schulterseitigen Querrillen lässt sich die Gefahr, dass locker am Nutzfahrzeugreifen befestigte Schnee- bzw. Traktionsketten üblicher Dimensionen und Ausführungen in die Querrillen fallen und sich gegebenenfalls in diesen verklemmen, deutlich reduzieren. Gerade im Bereich der Endabschnitte der Querrillen bei den Schulterflanken ist die Gefahr, dass sich Kettenabschnitte verfangen, besonders groß. Wird ein Verfangen vermieden, unterbleiben auch Schäden an den schulterseitigen Profilblöcken. Die Auslegung der Querrillen im jeweiligen Laufstreifen richtet sich nach den vom Kettenhersteller empfohlenen Ketten, welche insbesondere auf den Reifenhersteller, die Reifendimension und den Verwendungszweck des Reifens abgestimmt sind. Am Rillenaustritt sollte die Breite der Querrillen höchstens 80% der Breite der Kettenglieder betragen.

Ein Verklemmen der meisten üblichen Schnee- oder Traktionsketten wird dann besonders wirkungsvoll vermieden, wenn gemäß einer bevorzugten Ausführung die Breite der Querrillen am Rillenaustritt 10,0 mm bis 11,0 mm beträgt.

Ferner ist es von Vorteil, wenn in den Querrillen jeweils eine Grundanhebung ausgebildet ist, welche die Tiefe der Querrillen lokal auf 50% bis 70% der Profiltiefe verringert. Durch solche Grundanhebungen lässt sich die Steifigkeit der schulterseitigen Profilblockreihe erhöhen und die Querrillen neigen nicht zum Verbreitern unter Last, wodurch einem Verklemmen von Ketten ebenfalls entgegengewirkt wird.

Dabei ist es ferner von Vorteil, wenn die eine Rillenkante der Querrillen zur axialen Richtung unter einem Winkel von 18° bis 22° und die andere Rillenkante zur axialen Richtung unter einem Winkel von 10° bis 14° verläuft.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine schulterseitige Profilblockreihe eines Laufstreifens eines Nutzfahrzeugreifens,
Fig. 2 einen Schnitt entlang der Linie II-II der Fig. 1 und
Fig. 3 einen Schnitt entlang der Linien III-III der Fig. 1.

Die Erfindung befasst sich mit der Ausgestaltung von schulterseitigen Querrillen eines Laufstreifens eines Nutzfahrzeugreifens. Der Nutzfahrzeugreifen ist insbesondere für einen LKW vorgesehen oder ist insbesondere ein OTR-Reifen ("Off-the-Road-Reifen"). OTR-Reifen werden beispielsweise bei Reach-Stacker, Empty-Container Handler, Toploader und weiteren Industriefahrzeugen eingesetzt. Die Nutzfahrzeugreifen können dabei sowohl in Radialbauart als auch Diagonalbauart ausgeführt sein.

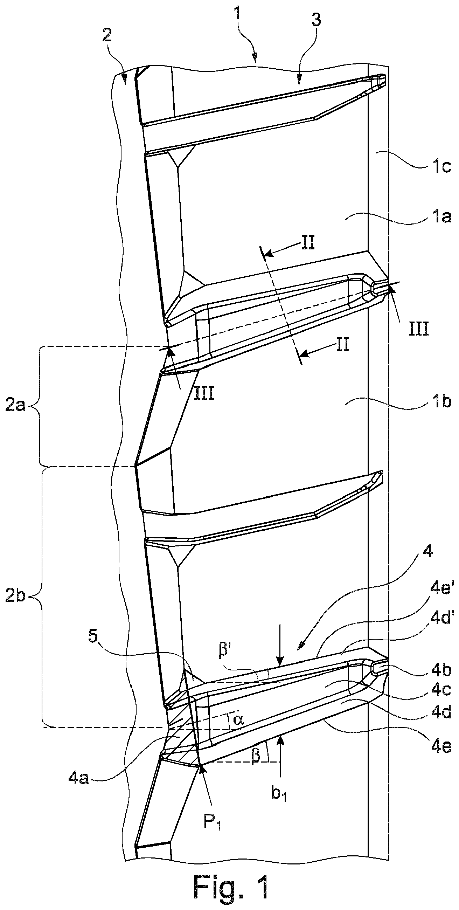

Fig. 1 zeigt eine Draufsicht auf einen Umfangsabschnitt einer schulterseitigen Profilblockreihe 1 eines Laufstreifens eines Nutzfahrzeugreifens, welche laufstreifeninnenseitig durch eine Umfangsrille 2 begrenzt ist. Die nicht gezeigten Laufstreifenbereiche können in an sich bekannter Weise ausgeführt sein, wobei in der zweiten Laufstreifenschulter vorzugsweise eine zur schulterseitigen Profilblockreihe 1 analog ausgeführte Profilblockreihe verläuft.

Die Umfangsrille 2 ist auf die jeweils vorgesehene Profiltiefe ausgeführt, welche für Nutzfahrzeugreifen beispielsweise 12,0 mm bis 26,0 mm beträgt, und setzt sich aus in Umfangsrichtung abwechselnd aufeinanderfolgenden kurzen Rillenabschnitten 2a und länger als die kurzen Rillenabschnitte 2a ausgeführten, langen Rillenabschnitten 2b zusammen, wobei die Rillenabschnitte 2a, 2b zur Umfangsrichtung jeweils unter einem Winkel von 5° bis 25°, insbesondere mindestens 20°, verlaufen.

Die schulterseitige Profilblockreihe 1 ist abwechselnd mit schmäleren Querrillen 3 und mit breiter als diese ausgeführten, breiteren Querrillen 4 versehen, wobei die Querrillen 3, 4 in Draufsicht parallel zueinander verlaufen und die Profilblockreihe 1 durchqueren. Die schmäleren Querrillen 3 münden jeweils in einen langen Rillenabschnitt 2a ein, die breiteren Querrillen 4 münden jeweils am gegenseitigen Anschlussbereich eines Rillenabschnittes 2a und eines Rillenabschnittes 2b in die Umfangsille 2 ein. Laufstreifenaußenseitig treten die Querrillen 3, 4 an einer zur nicht gezeigten Seitenwand verlaufenden Schulterflanke 1c aus. Ferner gliedern die Querrillen 3, 4 die Profilblockreihe 1 in an die langen Rillenabschnitte 2b angrenzende, in Draufsicht parallogrammartige Profilblöcke 1a und in zwischen Profilblöcken 1a liegende Profilblöcke 1b.

Die breiteren Querrillen 4 verlaufen in Draufsicht zur axialen Richtung unter einem Winkel α von 5° bis 25°, insbesondere von 12° bis 20°, weisen an der Umfangsrille 2 eine Rillenmündung 4a (in Fig. 1 bei einer Querrille 4 gestrichelt angedeutet) und laufstreifenaußenseitig einen an der Schulterflanke 1c liegenden Rillenaustritt 4b auf. Ferner sind die breiteren Querrillen 4 jeweils durch einen Rillengrund 4c, Rillenflanken 4d, 4d` sowie an der Laufstreifenperipherie durch Rillenkanten 4e, 4e` begrenzt. Die Rillenkante 4e verläuft zur axialen Richtung unter einem Winkel β von insbesondere 18° bis 22°, die Rillenkante 4e` verläuft zur axialen Richtung unter einem Winkel β' von insbesondere 10° bis 14°.

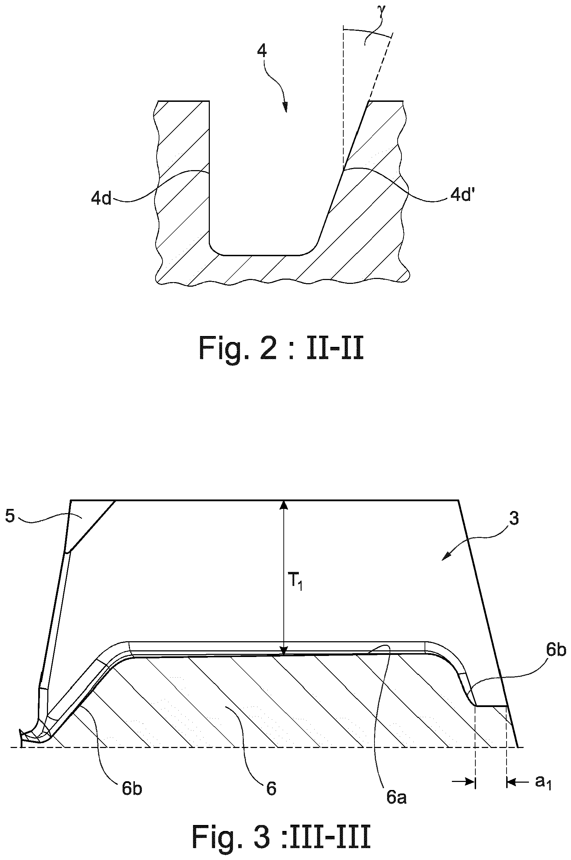

Gemäß Fig. 2 verläuft die Rillenflanke 4d, im Querschnitt der jeweiligen Querrille 4 betrachtet, in radialer Richtung, die Rillenflanke 4d` verläuft, im Querschnitt der Querrille 4 betrachtet, zur radialen Richtung unter einem Winkel γ von bis 10° bis 25°, insbesondere von zumindest 15°, besonders bevorzugt von 20° bis 24°.

Wie Fig. 1 zeigt, sind die parallelogrammartigen Profilblöcke 1a beim gezeigten Ausführungsbeispiel an ihren an der Umfangsrille 2 liegenden Eckbereichen jeweils mit einer Eckfase 5 abgeschrägt, deren Breite ausgehend von der Laufstreifenperipherie nach radial innen abnimmt.

Jede breitere Querrille 4 weist eine Breite bi auf, welche dem in Umfangsrichtung zwischen den Rillenkanten 4e, 4e` ermittelten Abstand ohne Berücksichtigung von etwaigen Eckfasen 5 entspricht. Im Bereich der Eckfasen 5 ist die Breite b₁ daher zwischen in Verlängerung der Rillenkanten 4e, 4e` verlaufenden Linien ermittelt. Am Rillenaustritt 4b ist die Breite b₁ zwischen den Rillenkanten 4e, 4e` am radial äußeren Ende der Schulterflanke 1c ermittelt und beträgt an dieser Stelle 6,0 mm bis 12,0 mm, insbesondere 10,0 mm bis 11,0 mm. An der Rillenmündung 4a ist die Breite der Querrille 4 am weitesten laufstreifenaußenseitig liegenden Punkt P₁ der Rillenmündung 4a ermittelt. Ausgehend vom Rillenaustritt 4b nimmt die Breite bi bis zur Rillenmündung 4a kontinuierlich auf das 1,5- bis 1,7-Fache zu. An der Rillenmündung 4a beträgt die Breite bi also das 1,5- bis 1,7-Fache der Breite b₁ am Rillenaustritt 4b.

Wie Fig. 3 zeigt, ist beim gezeigten Ausführungsbeispiel in jeder Querrille 4 eine Grundanhebung 6 ausgebildet, welche sich ausgehend von der Umfangsrille 2 (Fig. 1) in Richtung zur Laufstreifenaußenseite erstreckt und an ihrer Basis zum laufstreifenaußenseitigen Ende der Querrille 4 in axialer Richtung einen Abstand a₁ von 2,0 mm bis 5,0 mm aufweist. Die Grundanhebung 6 weist eine zumindest im Wesentlichen parallel zur Laufstreifenperipherie ausgerichtete Deckfläche 6a auf, an deren Enden nach radial innen abfallende Stirnflächen 6b anschließen, wobei die laufstreifeninnenseitig liegende Stirnfläche 6b zum Rillengrund der Umfangsrille 2 verläuft. Die Querrille 4 weist im Bereich der Deckfläche 6a der Grundanhebung 6 in radialer Richtung eine Tiefe T₁ auf, welche insbesondere 50% bis 70% der Profiltiefe beträgt.

Die Erfindung ist auf die beschriebene Ausführungsvariante nicht beschränkt.

Die Umfangsrille 2 kann von der beschriebenen Gestalt abweichen und beispielsweise in Draufsicht gerade verlaufen. Die Rillenflanken 4d, 4d` der Querrillen 4 können auch eine übereinstimmende Neigung zur radialen Richtung aufweisen. Die Grundanhebungen 6 sind optional.

### Bezugsziffernliste

- 1: Profilblockreihe
- 1a: Profilblock
- 1b: Profilblock
- 1c: Schulterflanke
- 2: Umfangsrille
- 2a: Rillenabschnitt
- 2b: Rillenabschnitt
- 3: Querrille
- 4: Querrille
- 4a: Rillenmündung
- 4b: Rillenaustritt
- 4c: Rillengrund
- 4d, 4d': Rillenflanke
- 4e, 4e': Rillenkante
- 5: Eckfase
- 6: Grundanhebung
- 6a: Deckfläche
- 6b: Flanke
- a₁: Abstand
- b₁: Breite
- P₁: Punkt
- T₁: Tiefe
- α, β, β', γ: Winkel

## Patentansprüche

1. Nutzfahrzeugreifen mit einem Laufstreifen mit zumindest einer von einer Umfangsrille (2) begrenzten, schulterseitigen Profilblockreihe (1) mit einer Schulterflanke (1c) und parallel zueinander verlaufenden Querrillen (4), welche jeweils zwei gerade verlaufende Rillenkanten (4e, 4e'), eine Rillenmündung (4a) an der Umfangsrille (2) sowie einen Rillenaustritt (4b) an der Schulterflanke (1c) und eine Breite (bi) aufweisen, welche dem zwischen den Rillenkanten (4e, 4e') bzw. deren Verlängerungen in Umfangsrichtung vorliegenden Abstand entspricht, wobei die Breite (b₁) der Querrillen (4) am Rillenaustritt (4b) 6,00 mm bis 12,0 mm beträgt, **dadurch gekennzeichnet, dass** die Breite der Querrillen (4) ausgehend vom Rillenaustritt (4b) zur Rillenmündung (4a) kontinuierlich auf das 1,5- bis 1,7-Fache zunimmt.

2. Fahrzeugluftreifen nach Anspruch 1, **dadurch gekennzeichnet, dass** die Breite (bi) der Querrillen (4) am Rillenaustritt (4b) 10,0 mm bis 11,0 mm beträgt.

3. Fahrzeugluftreifen nach Anspruch 1 oder 2, **dadurch gekennzeichnet, dass** in den Querrillen (4) jeweils eine Grundanhebung (6) ausgebildet ist, welche die Tiefe der Querrillen (4) lokal auf 50% bis 70% der Profiltiefe verringert.

4. Fahrzeugluftreifen nach einem der Ansprüche 1 bis 3, **dadurch gekennzeichnet, dass** die eine Rillenkante (4e) zur axialen Richtung unter einem Winkel (β) von 18° bis 22° und die andere Rillenkante (4e') zur axialen Richtung unter einem Winkel (β') von 10° bis 14° verläuft.

5. Fahrzeugluftreifen nach einem der Ansprüche 1 bis 4, **dadurch gekennzeichnet, dass** die Rillenkanten (4e, 4e') zur axialen Richtung gleichsinnig geneigt sind.

## Claims

1. Commercial-vehicle tyre having a tread with at least one shoulder-side profileblock row (1) which is delimited by a circumferential groove (2) and has a shoulder flank (1c) and has transverse grooves (4) extending parallel to one another, said transverse grooves in each case having two groove edges (4e, 4e') which extend straight, a groove mouth (4a) at the circumferential groove (2), and a groove exit (4b) at the shoulder flank (1c), and have a width (b₁) which corresponds to the spacing between the groove edges (4e, 4e') or the extensions thereof in a circumferential direction, wherein the width (b₁) of the transverse grooves (4) at the groove exit (4b) is 6.00 mm to 12.0 mm, **characterized in that** the width of the transverse grooves (4) increases continuously from the groove exit (4b) to the groove mouth (4a) to a value 1.5 times to 1.7 times greater.

2. Pneumatic vehicle tyre according to Claim 1, **characterized in that** the width (b₁) of the transverse grooves (4) at the groove exit (4b) is 10.0 mm to 11.0 mm.

3. Pneumatic vehicle tyre according to Claim 1 or 2, **characterized in that**, in the transverse grooves (4), there is in each case formed a base elevation (6) which locally reduces the depth of the transverse grooves (4) to 50% to 70% of the profile depth.

4. Pneumatic vehicle tyre according to one of Claims 1 to 3, **characterized in that** one groove edge (4e) extends at an angle (β) of 18° to 22° to the axial direction, and the other groove edge (4e') extends at an angle (β') of 10° to 14° to the axial direction.

5. Pneumatic vehicle tyre according to one of Claims 1 to 4, **characterized in that** the groove edges (4e, 4e') are inclined to the axial direction in the same direction.

## Revendications

1. Pneumatique de véhicule utilitaire comprenant une bande de roulement qui est pourvue d'au moins une rangée de blocs de sculpture côté épaulement (1), délimitée par une rainure circonférentielle (2), d'un flanc d'épaulement (1c) et de rainures transversales (4) parallèles entre elles qui comportent chacune deux bords de rainure rectilignes (4e, 4e'), une ouverture de rainure (4a) sur la rainure circonférentielle (2) et une sortie de rainure (4b) sur le flanc d'épaulement (1c) et qui ont une largeur (bi) qui correspond à la distance entre les bords de rainure (4e, 4e') ou leurs prolongements dans la direction circonférentielle, la largeur (bi) des rainures transversales (4) à la sortie de rainure (4b) étant de 6,00 mm à 12,0 mm,
**caractérisé en ce que**
la largeur des rainures transversales (4) augmente de manière continue d'un facteur de 1,5 à 1,7 depuis la sortie de rainure (4b) jusqu'à l'ouverture de rainure (4a).

2. Pneumatique de véhicule selon la revendication 1, **caractérisé en ce que** la largeur (bi) des rainures transversales (4) à la sortie de rainure (4b) est de 10,0 mm à 11,0 mm.

3. Pneumatique de véhicule selon la revendication 1 ou 2, **caractérisé en ce que** dans chacune des rainures transversales (4) une surélévation de base (6) est formée qui réduit la profondeur des rainures transversales (4) localement de 50 % à 70 % de la profondeur de sculpture.

4. Pneumatique de véhicule selon l'une des revendications 1 à 3, **caractérisé en ce qu'**un bord de rainure (4e) s'étend avec un angle (β) de 18° à 22° par rapport à la direction axiale et l'autre bord de rainure (4e') s'étend avec un angle (β') de 10° à 14° par rapport à la direction axiale.

5. Pneumatique de véhicule selon l'une des revendications 1 à 4, **caractérisé en ce que** les bords de rainure (4e, 4e') sont inclinés dans le même sens par rapport à la direction axiale.
